# EUROPÄISCHE PATENTANMELDUNG

(11) **EP 4 693 091 A1**
(43) Veröffentlichungstag der Anmeldung: **11.02.2026**
(21) Anmeldenummer: 25194404.7
(22) Anmeldetag: 06.08.2025
(51) Int. Cl.: G06F 40/103, G06F 40/174

(54) **DARSTELLUNG VON INFORMATIONSPAKETEN, DIE SOWOHL TEXT ALS AUCH ZUGEORDNETEN GRAFIKEN ENTHALTEN**

(30) Priorität: 06.08.2024 DE 202024104431 U
(71) Anmelder: Vermögens- und Beteiligungsgesellschaft Fuchs mbH, 20457 Hamburg (DE)
(72) Erfinder: Fuchs, Heiko, 20457 Hamburg (DE)
(74) Vertreter: Eisenführ Speiser

(57) **Zusammenfassung**

Die vorliegende Erfindung betrifft eine Vorrichtung, die konfiguriert ist, auf eine Datenbank zuzugreifen, in der Informationspakete gespeichert sind. Diese Informationspakete bestehen aus Text und oder mehreren Grafiken. Der Text besteht aus Textabschnitten in einer vorgegebenen Reihenfolge, wobei jeder Textabschnitt aus einem oder mehreren Wörtern besteht. Die Programmdaten enthalten eine Zuordnungstabelle, in der jede Grafik mindestens einem Textabschnitt zu geordnet ist. Die Vorrichtung verfügt über eine Benutzerschnittstelle, und die Programmdaten sind so konfiguriert, dass sie das Informationspaket bereitstellen. Die Bereitstellung des Textes beinhaltet die Ausgabe der Textabschnitte. Diese vorgegebene Reihenfolge ist eine zeitliche Ab folge, in der die Textabschnitte ausgegeben werden. Die Bereitstellung einer Grafik aus den ein oder mehreren Grafiken umfasst die Ermittlung der Grafik anhand einer Zuordnung aus der Zuordnungstabelle synchron zur Ausgabe eines Textabschnittes und die gleichzeitige Anzeige der ermittelten Grafik mit der Ausgabe des Textabschnittes, der ihr in der Zuordnungstabelle zugeordnet ist , über die Benutzerschnittstelle.

## Beschreibung

Die vorliegende Erfindung betrifft eine elektronische Vorrichtung, mit Programmdaten, die konfiguriert sind, auf eine Datenbank zuzugreifen, in der Informationspakete gespeichert sind. In einem nebengeordneten Aspekt betrifft die Erfindung ein Computerprogrammprodukt, das auf einem Computer abläuft, wobei das Computerprogrammprodukt konfiguriert ist, auf eine Datenbank zuzugreifen, in der Informationspakete gespeichert sind.

Elektronische Vorrichtungen, die auf Datenbanken zugreifen, um Informationspakete bereitzustellen, sind in vielen Bereichen weit verbreitet, insbesondere in der Datenverarbeitung und Kommunikationstechnik. Sie dienen dazu, Informationen zu speichern und zu übertragen. Diese Informationspakete können eine Vielzahl von Inhalten enthalten, wie Text, Bilder, und Audiodateien. Die Bereitstellung dieser Informationspakete kann auf verschiedene Weisen erfolgen, abhängig von den spezifischen Anforderungen des Benutzers und dem Kontext, in dem die Vorrichtung verwendet wird, beispielsweise als grafische Darstellung oder Audioausgabe.

Eine Herausforderung bei der Bereitstellung von Informationspaketen besteht darin, die relevanten Informationen auf eine Weise zu präsentieren, die für den Benutzer leicht verständlich und zugänglich ist. Herkömmliche Methoden zur Informationsbereitstellung sind oft statisch und bieten wenig Anpassungsfähigkeit an den Benutzer oder den Kontext. Darüber hinaus kann die Menge an bereitgestellten Informationen unübersichtlich sein, insbesondere, wenn sie in Form von langen Textblöcken präsentiert wird.

Insbesondere kann es schwierig sein, Text und Grafiken auf eine Weise zu präsentieren, die den Zusammenhang zwischen diesen verdeutlicht. Darüber hinaus kann es wünschenswert sein, die Bereitstellung von Informationspaketen an bestimmte Ereignisse oder Bedingungen zu knüpfen, wie zum Beispiel die Ausführung bestimmter Operationen durch den Benutzer oder das Eintreten bestimmter Zustände in der Umgebung der Vorrichtung. Beispielsweise kann es wünschenswert sein, dass bestimmte Grafiken angezeigt werden, wenn eine bestimmte Bedingung erfüllt ist, wie zum Beispiel das Erreichen einer bestimmten geographischen Position.

Weiterhin kann es erforderlich sein, Texte in andere Sprachen zu übersetzen. Dies erfolgt häufig maschinell und unterstützt durch künstliche Intelligenz. Bekannte Vorrichtungen zur Übersetzung von Texten haben jedoch den Nachteil, dass die Übersetzungen entweder mit einem Zeitstempel versehen oder semantisch durchgeführt werden. Dies führt dazu, dass die Übersetzung der Textabschnitte nicht mehr zu den angezeigten Grafiken passt. Dies kann insbesondere dann problematisch sein, wenn die Texte und Grafiken in einem bestimmten Kontext stehen und die Grafiken zur Veranschaulichung oder Erläuterung der Texte dienen. Grundsätzlich führt nach Erkenntnis der Erfinder die Wiedergabe einer solchen Übersetzung - beispielsweise als Sprachausgabe oder Bildschirmlauftext - in Verbindung mit einer nach Zeitablauf oder anhand der Wortzahl synchronisierten Bildwiedergabe zu sinnverfälschenden Ergebnissen. Aufgrund der in den unterschiedlichen Sprachen, vor allem bei Übersetzung zwischen zwei Sprachen unterschiedlicher Sprachfamilien oder Sprachräume, sehr verschiedenen Satzstellungen geht der verständnisfördernde Effekt einer Bildunterstützung des Textes verloren, bis hin zu einer Sinnverfälschung.

Die vorliegende Erfindung adressiert diese Nachteile, indem sie eine Lösung zur Bereitstellung von Informationspaketen, die sowohl Text als auch Grafiken enthalten, vorschlägt. Die Vorrichtung ist so konfiguriert, dass sie auf eine Datenbank zugreift, in der die Informationspakete gespeichert sind, und diese abruft, wenn eine vorbestimmte Operation ausgeführt wird. Die abgerufenen Informationen werden bereitgestellt, indem einzelne Textabschnitte nacheinander bereitgestellt und die zugeordneten Grafiken automatisch angezeigt werden. Die Programmdaten umfassen eine Zuordnungstabelle, in der jede Grafik mindestens einem Textabschnitt zugeordnet ist. Die Vorrichtung verfügt über eine Benutzerschnittstelle, und die Programmdaten sind so konfiguriert, dass sie das Informationspaket bereitstellen, wenn eine zweite vorbestimmte Operation ausgeführt wird. Die Bereitstellung des Textes umfasst die Ausgabe der Textabschnitte in der vorgegebenen Reihenfolge über die Benutzerschnittstelle. Die vorgegebene Reihenfolge ist eine zeitliche Abfolge, in der die Textabschnitte ausgegeben werden. Die Bereitstellung einer Grafik umfasst die Ermittlung der Grafik anhand einer Zuordnung aus der Zuordnungstabelle synchron zur Ausgabe eines Textabschnittes, und die ermittelte Grafik wird gleichzeitig mit der Ausgabe des Textabschnittes, dem sie in der Zuordnungstabelle zugeordnet ist, über die Benutzerschnittstelle angezeigt.

Die Bereitstellung des Textes kann als angezeigter Text erfolgen. Die Bereitstellung des Textes kann auch als Audioausgabe erfolgen.

Die Vorrichtung ist so konfiguriert, dass sie den Text und die zugeordneten Grafiken über eine Benutzerschnittstelle ausgibt. Zudem bietet sie die Möglichkeit, den Text in eine andere Sprache zu übersetzen. Ein wesentlicher Vorteil der Erfindung besteht darin, dass die Vorrichtung in der Lage ist, die Texte zu übersetzen und gleichzeitig die Zuordnung von Textabschnitten zu den zugehörigen Grafiken beizubehalten. Dies ermöglicht es, dass die Aussage des übersetzten Textes in einer genau passenden Synchronisation der Grafikwiedergabe zur Textwiedergabe immer zueinander passt. Dies kann erfindungsgemäß für eine Übersetzung zwischen jeder Sprache - auch Sprachfamilien und Sprachraum-übergreifend sichergestellt werden.

Ein weiterer Vorteil der Erfindung ist die Möglichkeit, Informationen basierend auf dem geografischen Standort des Benutzers bereitzustellen. Die Vorrichtung kann eine geografische Position erfassen und Informationspakete abrufen, die mit bestimmten geografischen Positionen verknüpft sind.

Die vorliegende Erfindung betrifft eine elektronische Vorrichtung, die mit Programmdaten ausgestattet ist, die darauf konfiguriert sind, auf eine Datenbank zuzugreifen, in der Informationspakete gespeichert sind. Diese Informationspakete enthalten einen Text und eine oder mehrere Grafiken. Der Text besteht aus einer Vielzahl von Textabschnitten in einer vorgegebenen Reihenfolge, wobei jeder Textabschnitt aus einem oder mehreren Wörtern besteht. Die Programmdaten umfassen eine Zuordnungstabelle, in der jede Grafik mindestens einem Textabschnitt zugeordnet ist. Die Vorrichtung ist so konfiguriert, dass sie ein Informationspaket abruft, wenn eine erste vorbestimmte Operation ausgeführt wird. Die Vorrichtung verfügt über eine Benutzerschnittstelle, und die Programmdaten sind so konfiguriert, dass sie das Informationspaket bereitstellen, wenn eine zweite vorbestimmte Operation ausgeführt wird. Die Bereitstellung des Textes umfasst die Ausgabe der Textabschnitte in der vorgegebenen Reihenfolge über die Benutzerschnittstelle. Die vorgegebene Reihenfolge ist eine zeitliche Abfolge, in der die Textabschnitte ausgegeben werden. Die Bereitstellung einer Grafik umfasst die Ermittlung der Grafik anhand einer Zuordnung aus der Zuordnungstabelle synchron zur Ausgabe eines Textabschnittes, und die ermittelte Grafik wird gleichzeitig mit der Ausgabe des Textabschnittes, dem sie in der Zuordnungstabelle zugeordnet ist, über die Benutzerschnittstelle angezeigt.

Durch die gleichzeitige Anzeige von Text und zugehörigen Grafiken wird das Verständnis der bereitgestellten Informationen verbessert. Zudem ermöglicht die zeitliche Abfolge der Textabschnitte eine schrittweise Präsentation der Informationen, was besonders vorteilhaft ist, wenn die Informationen komplex oder umfangreich sind. Sie kann auch in verschiedenen Geräten implementiert werden, beispielsweise in Computern, Tablets oder Smartphones.

Die erste vorbestimmte Operation, die die Vorrichtung dazu veranlasst, auf die Datenbank zuzugreifen und ein Informationspaket abzurufen, kann auf verschiedene Weisen ausgelöst werden. Eine Möglichkeit ist die Benutzereingabe. In diesem Fall wird die Operation durch eine spezifische Aktion des Benutzers ausgelöst, beispielsweise durch das Klicken auf eine Schaltfläche, das Tippen auf einen Bildschirm oder das Eingeben eines bestimmten Befehls.

Die zweite vorbestimmte Operation, die die Vorrichtung dazu veranlasst, das Informationspaket bereitzustellen, kann auf verschiedene Weisen ausgelöst werden. Eine Möglichkeit ist die Benutzereingabe. In diesem Fall wird die Operation durch eine spezifische Aktion des Benutzers ausgelöst, beispielsweise durch das Klicken auf eine Schaltfläche, das Tippen auf einen Bildschirm oder das Eingeben eines bestimmten Befehls.

Eine andere Möglichkeit, die erste, bzw. die zweite vorbestimmte Operation auszulösen, ist die geographische Positionsbestimmung. In diesem Fall wird die Operation durch die physische Position des Geräts oder des Benutzers ausgelöst. Dies kann beispielsweise durch den Einsatz von GPS-Technologie oder anderen Standortbestimmungssystemen erreicht werden. Wenn das Gerät oder der Benutzer einen bestimmten geographischen Standort erreicht, wird die Operation ausgelöst und das Informationspaket abgerufen bzw. bereitgestellt.

Gemäß einer bevorzugten Ausführungsform umfasst die Vorrichtung weiterhin Programmdaten, die eine Übersetzung des Textes in eine andere Sprache beinhalten oder ausgebildet sind, eine solche Übersetzung des Textes zu erstellen. Die Programmdaten sind weiterhin so ausgebildet, dass sie aus der Zuordnung von Textabschnitten zu den Grafiken in der Zuordnungstabelle eine ergänzende Zuordnungstabelle erstellen, in der jedem ursprünglichen Textabschnitt entsprechender übersetzter Textabschnitt den entsprechenden Grafiken zugeordnet wird.

Die Programmdaten sind weiterhin so konfiguriert, dass sie das Informationspaket mit dem übersetzten Text bereitstellen. Die Bereitstellung des Textes umfasst die Ausgabe der übersetzten Textabschnitte in der vorgegebenen Reihenfolge über die Benutzerschnittstelle. Die vorgegebene Reihenfolge ist eine zeitliche Abfolge, in der die Textabschnitte ausgegeben werden. Die Bereitstellung der Grafik umfasst die Anzeige einer Grafik aus der Vielzahl der Grafiken, die einem übersetzten Textabschnitt in der Zuordnungstabelle zugeordnet ist, gleichzeitig mit der Ausgabe des übersetzten Textabschnitts über die Benutzerschnittstelle. Dies stellt sicher, dass die Grafiken, die den Textinhalt ergänzen, auch in der übersetzten Version des Textabschnitts korrekt präsentiert werden.

Gemäß einer weiteren bevorzugten Ausführungsform umfasst die Bereitstellung des Textes insbesondere eine Anzeige des Textes über die Benutzerschnittstelle. In diesem Fall wird ein Textabschnitt in dem Text, dem eine Grafik in der Zuordnungstabelle zugeordnet ist, durch ein grafisches Kenntlichmachen des Textabschnittes dem Benutzer hervorgehoben. Bei dem Hervorheben des Textabschnittes wird eine diesem Textabschnitt zugeordnete Grafik über die Benutzerschnittstelle angezeigt. Das Hervorheben der Textabschnitte kann auf verschiedene Weisen erfolgen. Eine Möglichkeit ist die Verwendung von Farben oder Schriftarten, um die hervorgehobenen Textabschnitte zu kennzeichnen. Eine andere Möglichkeit ist die Verwendung von Animationen oder visuellen Effekten.

Die automatische Anzeige der zugeordneten Grafik kann ebenfalls auf verschiedene Weisen erfolgen. Eine Möglichkeit ist die Anzeige der Grafik neben dem Text, so dass sie direkt neben dem zugehörigen Textabschnitt angezeigt wird. Eine andere Möglichkeit ist die Verwendung von Pop-up-Fenstern, um die Grafik anzuzeigen.

Gemäß einer weiteren bevorzugten Ausführungsform umfasst die Vorrichtung insbesondere ein Audiomodul mit Lautsprecher, das so konfiguriert ist, dass die Bereitstellung des Textes die Ausgabe des Textes als eine Audiospur über den Lautsprecher umfasst. Dies ermöglicht es der Vorrichtung, die bereitgestellten Informationen in einer akustischen Form zu präsentieren.

Ein Textabschnitt in dem Text, dem eine Grafik in der Zuordnungstabelle zugeordnet ist, wird durch eine akustische Betonung des Textabschnittes dem Benutzer hervorgehoben. Bei der hervorgehobenen Ausgabe des Textabschnittes wird eine diesem Textabschnitt in der Zuordnungstabelle zugeordnete Grafik über die Benutzerschnittstelle angezeigt.

Das Audiomodul kann verschiedene Techniken verwenden, um den Text in eine Audiospur zu konvertieren. Dies kann beispielsweise Text-zu-Sprache-Technologie, Sprachsynthese oder andere Audioverarbeitungstechniken umfassen. Das Audiomodul kann auch so konfiguriert sein, dass es die Qualität der Audiospur überprüft und verbessert, beispielsweise durch den Einsatz von Rauschunterdrückung.

Die automatische Anzeige der zugeordneten Grafik kann ebenfalls auf verschiedene Weisen erfolgen. Eine Möglichkeit ist die Verwendung von Pop-up-Fenstern.

Gemäß einer weiteren bevorzugten Ausführungsform ist ein weiteres Merkmal der Vorrichtung, dass die Textabschnitte der Audiospur zu dem Zeitpunkt abgespielt werden, an dem die entsprechenden Textabschnitte des angezeigten Textes hervorgehoben sind.

Die Synchronisation von Audio- und Textausgabe kann auf verschiedene Weisen erreicht werden. Eine Möglichkeit ist die Verwendung von Zeitstempeln oder Markierungen, um die entsprechenden Teile der Audiospur und des Textes zu kennzeichnen. Eine andere Möglichkeit ist die Verwendung von KI-Techniken, um die Synchronisation automatisch vorzunehmen.

Gemäß einer weiteren bevorzugten Ausführungsform ist die erste vorbestimmte Operation und/oder die zweite vorbestimmte Operation eine manuelle Eingabe. Die manuelle Eingabe kann auf verschiedene Weisen erfolgen. Eine Möglichkeit ist die Benutzereingabe, bei der die Operation durch eine spezifische Aktion des Benutzers ausgelöst wird, beispielsweise durch das Klicken auf eine Schaltfläche, das Tippen auf einen Bildschirm oder das Eingeben eines bestimmten Befehls. Eine andere Möglichkeit ist die Verwendung von Gesten oder Bewegungen, um die Operation auszulösen, beispielsweise durch das Wischen über einen Bildschirm oder das Bewegen eines Geräts.

Gemäß einer weiteren bevorzugten Ausführungsform umfasst die Vorrichtung eine Positionserfassungsschnittstelle, die konfiguriert ist, eine geographische Position zu erfassen. Dies ermöglicht es der Vorrichtung, den physischen Standort des Benutzers zu erkennen und auf dieser Basis bestimmte Operationen auszuführen. Die Programmdaten sind so ausgebildet, dass sie die erfasste geographische Position mit einer in einer gespeicherten Positionstabelle vorbestimmten geographischen Position vergleichen können. Wenn der Abstand zwischen der erfassten geographischen Position und der vorbestimmten geographischen Position einen vorbestimmten Toleranzwert unterschreitet, führen die Programmdaten die erste vorbestimmte Operation und/oder die zweite vorbestimmte Operation aus. Der vorbestimmte Toleranzwert kann beispielsweise 5 m, 10 m 20 m oder einen anderen beliebigen Wert betragen.

Die Positionserfassungsschnittstelle kann verschiedene Technologien verwenden, um die geographische Position zu erfassen. Dies kann beispielsweise GPS-Technologie, Mobilfunkortung oder andere Standortbestimmungstechnologien umfassen. Beispielsweise kann die Vorrichtung so konfiguriert sein, dass bestimmte Informationen bereitstellt werden, wenn der Benutzer einen bestimmten geographischen Standort erreicht.

Gemäß einer weiteren bevorzugten Ausführungsform sind die Informationspakete mit den in der Positionstabelle gespeicherten geographischen Positionen verknüpft. Dies bedeutet, dass jedes Informationspaket mit einer bestimmten geographischen Position assoziiert ist und abgerufen oder bereitgestellt wird, wenn der Benutzer diese Position erreicht oder verlässt.

Die Positionstabelle könnte verschiedene Formate haben, abhängig von den spezifischen Anforderungen der Vorrichtung und den unterstützten Positionierungstechnologien. Beispielsweise könnte die Positionstabelle eine Liste von GPS-Koordinaten sein, wenn die Vorrichtung GPS zur Standortbestimmung verwendet. Alternativ kann die Positionstabelle eine Liste von Wi-Fi-Netzwerk-IDs sein, wenn die Vorrichtung Wi-Fi-Positionierung verwendet.

Gemäß einer weiteren bevorzugten Ausführungsform ist die Vorrichtung weiterhin konfiguriert, dass nach Ablauf einer vorbestimmten Zeitspanne eine zweite geographische Position ermittelt wird. Wenn die zweite geographische Position sich um mindestens einen vorbestimmten Grenzwert von der ersten geographischen Position unterscheidet, wird ein zweites Informationspaket abgerufen und bereitgestellt. Die vorbestimmte Zeitspanne und der vorbestimmte Grenzwert können je nach den spezifischen Anforderungen der Vorrichtung und den unterstützten Positionierungstechnologien variieren und auf verschiedene Weisen festgelegt werden. Beispielsweise können feste Werte vorgegeben sein. Die vorbestimme Zeitspanne könne beispielsweise 10 s, 30 s, 60 s oder eine andere beliebige Zeitspanne sein. Der vorbestimmte Grenzwert kann beispielsweise 5 m, 10 m 20 m oder einen anderen beliebigen Wert betragen. Eine andere Möglichkeit ist die Verwendung von KI-Techniken, um die Werte für die vorbestimmte Zeitspanne und den vorbestimmten Grenzwert basierend auf verschiedenen Faktoren, wie z.B. der Geschwindigkeit des Benutzers automatisch anzupassen.

Gemäß einer weiteren bevorzugten Ausführungsform ist die Vorrichtung weiterhin konfiguriert, dass sie auf einen Speicher zugreift, auf dem geographische Karten gespeichert sind. Basierend auf der erfassten geographischen Position kann die Vorrichtung die entsprechende Karte abrufen und über die Benutzerschnittstelle anzeigen. Darüber hinaus kann die Vorrichtung die erfasste geographische Position auf der Karte grafisch kenntlich machen. Die Karten können verschiedene Formate und Detailstufen haben, abhängig von den spezifischen Anforderungen der Vorrichtung und den unterstützten Kartentechnologien. Beispielsweise könnten die Karten Straßenkarten, Satellitenbilder, topographische Karten oder eine Kombination davon sein.

Gemäß einer weiteren bevorzugten Ausführungsform umfasst die Vorrichtung weiterhin ein Endgerät mit einer Kamera. Das Endgerät ist so konfiguriert, dass es die Kameradaten über die Benutzerschnittstelle anzeigt. Auf Basis der erfassten Kameradaten kann die Vorrichtung eine Kl-gestützte Bilddatensuche in den Grafiken durchführen. Wenn eine Übereinstimmung gefunden wird, kann die Vorrichtung die zugeordnete Grafik und den dieser Grafik in der Zuordnungstabelle zugeordneten Textabschnitt über die Benutzerschnittstelle anzeigen. Die Kl-gestützte Bilddatensuche kann verschiedene Technologien und Algorithmen verwenden, wie z.B. Bilderkennung, Mustererkennung oder maschinelles Lernen.

Gemäß einer weiteren bevorzugten Ausführungsform ist die Vorrichtung konfiguriert, dass sie auf einen Speicher mit Augmented Reality-Inhalten zugreift. Auf Basis der erfassten Kameradaten kann die Vorrichtung eine Kl-gestützte Bilddatensuche in den Augmented Reality-Inhalten durchführen und diese über die Benutzerschnittstelle anzeigen. Die Kl-gestützte Bilddatensuche kann verschiedene Technologien und Algorithmen verwenden, wie z.B. Bilderkennung, Mustererkennung oder maschinelles Lernen.

Gemäß einer weiteren bevorzugten Ausführungsform umfasst die Vorrichtung weiterhin ein Spracherkennungs-Modul mit Mikrofon, das konfiguriert ist, Sprachbefehle mit vorbestimmten, gespeicherten Befehlen abzugleichen. Bei einer Übereinstimmung mit einem vorbestimmten, gespeicherten Befehl führt das Modul diesen aus. Darüber hinaus kann die erste vorbestimmte Operation und/oder die zweite vorbestimmte Operation einen Sprachbefehl umfassen. Diese Funktion ermöglicht es der Vorrichtung, Sprachbefehle zu erkennen und zu interpretieren und auf dieser Basis bestimmte Operationen auszuführen. Das Spracherkennungs-Modul kann verschiedene Technologien und Algorithmen verwenden, wie z.B. automatische Spracherkennung.

Insbesondere ist die elektronische Vorrichtung ist dazu ausgebildet, die folgenden Schritte auszuführen: Zunächst wird auf eine Datenbank zugegriffen, in der Informationspakete gespeichert sind. Wenn eine erste vorbestimmte Operation erfolgt, wird ein Informationspaket abgerufen, wobei dieses Informationspaket einen Text und eine oder mehrere Grafiken umfasst. Der Text wird aus einer Vielzahl von Textabschnitten in einer vorgegebenen Reihenfolge konfiguriert, wobei ein Textabschnitt aus einem oder mehreren Wörtern besteht. Eine Zuordnungstabelle wird bereitgestellt, in der jede Grafik mindestens einem Textabschnitt zugeordnet ist. Eine Benutzerschnittstelle wird bereitgestellt, und das Informationspaket wird bereitgestellt, wenn eine zweite vorbestimmte Operation erfolgt. Die Bereitstellung des Textes umfasst die Ausgabe der Textabschnitte in der vorgegebenen Reihenfolge über die Benutzerschnittstelle, wobei die vorgegebene Reihenfolge eine zeitliche Abfolge ist, in der die Textabschnitte ausgegeben werden. Die Bereitstellung einer Grafik umfasst die Ermittlung der Grafik anhand einer Zuordnung aus der Zuordnungstabelle synchron zur Ausgabe eines Textabschnittes, und die ermittelte Grafik wird gleichzeitig mit der Ausgabe des Textabschnittes, dem sie in der Zuordnungstabelle zugeordnet ist, über die Benutzerschnittstelle angezeigt.

Die vorliegende Erfindung betrifft auch ein Computerprogrammprodukt, das auf einem Computer abläuft. Das Computerprogrammprodukt ist konfiguriert, auf eine Datenbank zuzugreifen, in der Informationspakete gespeichert sind. Das Computerprogrammprodukt ist konfiguriert, ein Informationspaket abzurufen, wenn eine erste vorbestimmte Operation erfolgt. Das Informationspaket umfasst einen Text und eine oder mehrere Grafiken. Der Text besteht aus einer Vielzahl von Textabschnitten, die in einer vorgegebenen Reihenfolge angeordnet sind, wobei jeder Textabschnitt aus einem oder mehreren Wörtern besteht. Die Programmdaten umfassen eine Zuordnungstabelle, in der jede Grafik mindestens einem Textabschnitt zugeordnet ist. Das Computerprogrammprodukt ist so konfiguriert, dass sie das Informationspaket über eine Benutzerschnittstelle bereitstellen, wenn eine zweite vorbestimmte Operation erfolgt. Die Bereitstellung des Textes beinhaltet die Ausgabe der Textabschnitte in der vorgegebenen Reihenfolge über die Benutzerschnittstelle. Die vorgegebene Reihenfolge ist eine zeitliche Abfolge, in der die Textabschnitte ausgegeben werden. Die Bereitstellung einer Grafik umfasst die Ermittlung der Grafik anhand einer Zuordnung aus der Zuordnungstabelle synchron zur Ausgabe eines Textabschnittes, und die ermittelte Grafik wird gleichzeitig mit der Ausgabe des Textabschnittes, dem sie in der Zuordnungstabelle zugeordnet ist, über die Benutzerschnittstelle angezeigt.

Bevorzugte Ausführungsbeispiele werden beispielhaft anhand der beiliegenden Figuren erläutert. Es Zeigen:
- Fig. 1:: eine Vorrichtung, die konfiguriert ist auf eine Datenbank zuzugreifen und Informationspakete dieser Datenbank bereitzustellen;
- Fig. 2:: eine Vorrichtung, die konfiguriert ist Text und Ton zu einer zugeordneten Grafik bereitzustellen;
- Fig. 3:: eine Vorrichtung, die konfiguriert ist auf Grund eines geographischen Erfassungsergebnisses Informationspakete abzurufen und bereitzustellen;
- Fig. 4:: eine Zuordnungstabelle, umfassend Grafiken, Textabschnitte und Übersetzungen.

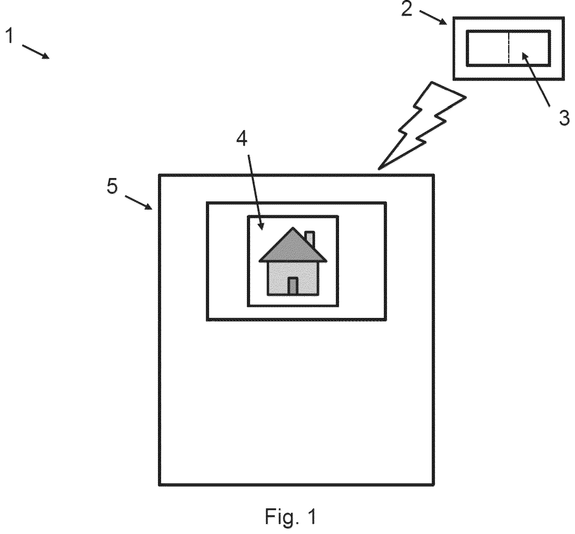

Fig.1 zeigt eine schematische Ansicht einer erfindungsgemäßen Vorrichtung 1. Die Vorrichtung 1 umfasst eine Datenbank 2, in der Informationspakete 3 gespeichert sind, und eine Benutzerschnittstelle 5. Die Vorrichtung 1 ist so konfiguriert, dass sie auf die Datenbank 2 zugreift und die gespeicherten Informationspakete 3 abruft. Nach dem Abruf kann die Vorrichtung 1 die zu den Informationspaketen 3 gehörenden Grafiken 4 über die Benutzerschnittstelle 5 anzeigen.

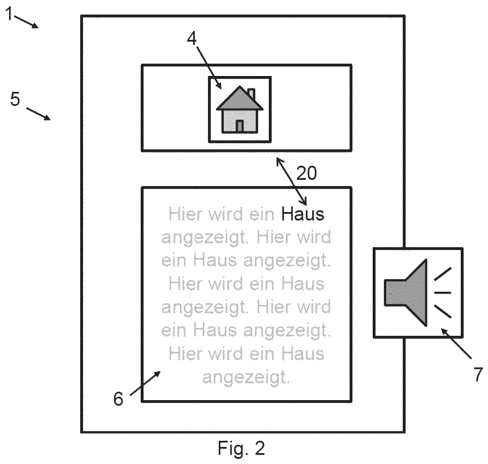

Fig. 2 zeigt eine schematische Ansicht der erfindungsgemäßen Vorrichtung 1, die eine Benutzerschnittstelle 5 umfasst. Über diese Schnittstelle werden eine Grafik 4 und ein Text 6 ausgegeben. Zusätzlich verfügt die Vorrichtung über ein Audiomodul 7, das den angezeigten Text als Audiospur wiedergibt. Nacheinander werden Textabschnitte hervorgehoben, die eine Verknüpfung 20 zu einer Grafik aufweisen. Beim Hervorheben dieser Textabschnitte wird die verknüpfte Grafik angezeigt und der Text gleichzeitig als Audioausgabe wiedergegeben.

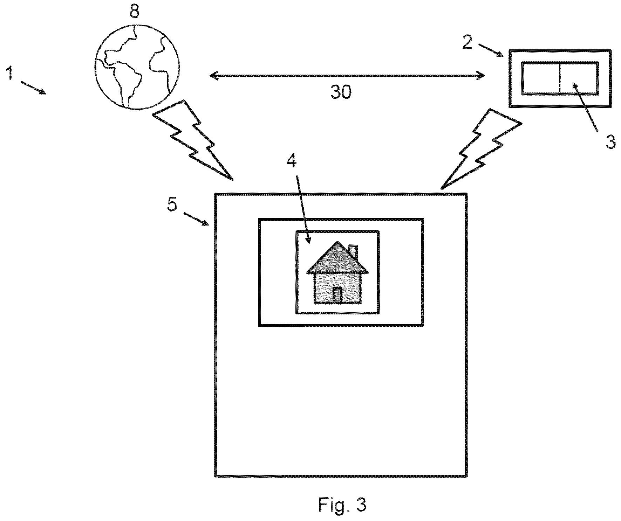

Fig. 3 zeigt eine schematische Ansicht der erfindungsgemäßen Vorrichtung 1, die eine Datenbank 2 umfasst, auf der Informationspakete 3 gespeichert sind, sowie eine Benutzerschnittstelle 5. Darüber hinaus verfügt die Vorrichtung über eine Positionserfassungsschnittstelle 8. Die Informationspakete 3 sind mit einem geographischen Erfassungsergebnis verknüpft. Auf Basis dieses geographischen Erfassungsergebnisses wird ein Informationspaket, das unter anderem eine Grafik 4 enthält, bereitgestellt.

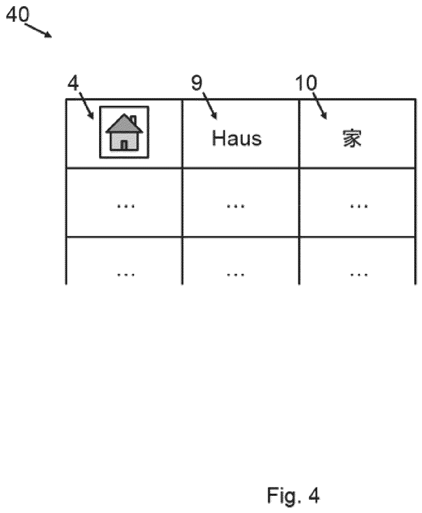

Fig. 4 zeigt eine schematische Ansicht der erfindungsgemäßen Zuordnungstabelle 40. Die Grafik 4 ist in dieser Tabelle einem Textabschnitt 9 zugeordnet. Die Grafik und der Textabschnitt sind weiterhin einem Textabschnitt in einer Übersetzung 10 zugeordnet. Die Übersetzung kann hierbei eine beliebige Sprache beinhalten.

### Bezugszeichenliste

1. Vorrichtung
2. Datenbank
3. Informationspaket
4. Grafik
5. Benutzerschnittstelle
6. Textanzeige
7. Audiomodul
8. Positionserfassungsschnittstelle
9. Textabschnitt
10. Übersetzung
20. Verknüpfung Text mit Grafik
30. Verknüpfung Informationspaket mit geographischer Position
40. Zuordnungstabelle

## Patentansprüche

1. Elektronische Vorrichtung, mit Programmdaten, die konfiguriert sind, auf eine Datenbank zuzugreifen, in der Informationspakete gespeichert sind, wobei
- die Programmdaten konfiguriert sind, ein Informationspaket abzurufen, wenn eine erste vorbestimme Operation erfolgt, wobei
∘ das Informationspaket einen Text und eine oder mehrere Grafiken umfasst, wobei
∘ der Text aus einer Vielzahl von Textabschnitten in einer vorgegebenen Reihenfolge besteht, wobei
▪ ein Textabschnitt aus einem oder mehreren Wörtern besteht, wobei
∘ die Programmdaten eine Zuordnungstabelle umfassen, in der jede Grafik mindestens einem Textabschnitt zugeordnet ist, wobei
- die Vorrichtung eine Benutzerschnittstelle aufweist, wobei die Programmdaten konfiguriert sind, das Informationspaket bereitzustellen, wenn eine zweite vorbestimme Operation erfolgt, wobei
∘ die Bereitstellung des Textes umfasst, die Textabschnitte in der vorgegebenen Reihenfolge über die Benutzerschnittstelle auszugeben, wobei
▪ die vorgegebene Reihenfolge eine zeitliche Abfolge ist, in der die Textabschnitte ausgegeben werden, wobei
∘ die Bereitstellung einer Grafik aus der einen oder mehreren Grafiken umfasst,
▪ die Grafik anhand einer Zuordnung aus der Zuordnungstabelle synchron zur Ausgabe eines Textabschnittes zu ermitteln, und
▪ die ermittelte Grafik gleichzeitig mit der Ausgabe des Textabschnittes, der sie in der Zuordnungstabelle zugeordnet ist, über die Benutzerschnittstelle anzuzeigen.

2. Vorrichtung nach Anspruch 1, umfassend weiterhin Programmdaten, die eine Übersetzung des Textes in eine andere Sprache beinhalten oder ausgebildet sind, eine solche Übersetzung des Textes zu erstellen,
- wobei die Programmdaten weiter ausgebildet sind, aus der Zuordnung von Textabschnitten zu den Grafiken in der Zuordnungstabelle eine ergänzende Zuordnungstabelle zu erstellen, in der jedem ursprünglichen Textabschnitt ein entsprechender übersetzter Textabschnitt den entsprechenden Grafiken zugeordnet ist, und
- die Programmdaten weiterhin konfiguriert sind, um das Informationspaket mit dem übersetzten Text bereitzustellen, wobei
∘ die Bereitstellung des Textes umfasst, die übersetzten Textabschnitte in der vorgegebenen Reihenfolge über die Benutzerschnittstelle auszugeben, wobei
▪ die vorgegebene Reihenfolge eine zeitliche Abfolge ist, in der die Textabschnitte ausgegeben werden, wobei
∘ die Bereitstellung der Grafik umfasst, eine Grafik aus der Vielzahl der Grafiken, die einem übersetzten Textabschnitt in der Zuordnungstabelle zugeordnet ist, gleichzeitig mit der Ausgabe des übersetzten Textabschnitts über die Benutzerschnittstelle anzuzeigen.

3. Vorrichtung nach einem der vorherigen Ansprüche, wobei die Bereitstellung des Textes eine Anzeige des Textes über die Benutzerschnittstelle umfasst, wobei
- ein Textabschnitt in dem Text, dem/der eine Grafik in der Zuordnungstabelle zugeordnet ist durch ein grafisches Kenntlichmachen des Textabschnittes dem Benutzer hervorgehoben wird, wobei
- bei dem Hervorheben des Textabschnittes eine diesem Textabschnitt zugeordnete Grafik über die Benutzerschnittstelle angezeigt wird.

4. Vorrichtung nach einem der vorherigen Ansprüche, wobei die Vorrichtung ein Audiomodul mit einem Lautsprecher aufweist, das so konfiguriert ist, dass die Bereitstellung des Textes die Ausgabe des Textes als eine Audiospur über den Lautsprecher umfasst, wobei
- Ein Textabschnitt in dem Text, dem eine Grafik in der Zuordnungstabelle zugeordnet ist, durch eine akustische Betonung des Textabschnittes dem Benutzer hervorgehoben wird, wobei
- bei der hervorgehobenen Ausgabe des Textabschnittes eine diesem Textabschnitt in der Zuordnungstabelle zugeordnete Grafik über die Benutzerschnittstelle angezeigt wird.

5. Vorrichtung nach den vorhergehenden Ansprüchen 3 und 4, wobei
- die Textabschnitte der Audiospur zu dem Zeitpunkt abgespielt werden, an dem die entsprechenden Textabschnitte des angezeigten Textes hervorgehoben sind.

6. Vorrichtung nach einem der vorherigen Ansprüche, wobei die erste vorbestimmte Operation und/oder die zweite vorbestimmte Operation eine manuelle Eingabe über die Benutzerschnittstelle ist.

7. Vorrichtung nach einem der vorherigen Ansprüche, wobei die Vorrichtung eine Positionserfassungsschnittstelle umfasst, die konfiguriert ist, eine geographische Position zu erfassen, wobei Programmdaten ausgebildet sind, um die erfasste geographische Position mit einer in einer gespeicherten Positionstabelle vorbestimmten geographischen Position zu vergleichen und bei Unterschreitung eines vorbestimmten Abstandstoleranzwertes zwischen der erfassten geographischen Position und der vorbestimmten geographischen Position die erste vorbestimmte Operation und/oder die zweite vorbestimmte Operation auszuführen.

8. Vorrichtung nach dem vorherigen Anspruch 7, wobei die Informationspakete mit den in der Positionstabelle gespeicherten geographischen Positionen verknüpft sind.

9. Vorrichtung nach einem der vorherigen Ansprüche 7-8, wobei die Vorrichtung so konfiguriert ist, dass
- nach Ablauf einer vorbestimmten Zeitspanne eine zweite geographische Position ermittelt wird, und wobei
- wenn die zweite geographische Position sich um mindestens einen vorbestimmten Grenzwert von der ersten geographischen Position unterscheidet, ein zweites Informationspaket abgerufen und bereitgestellt wird.

10. Vorrichtung nach einem der vorhergehenden Ansprüche 7-9, wobei die Vorrichtung so konfiguriert ist, auf einen Speicher zuzugreifen, auf dem geografische Karten gespeichert sind, und die Karte auf Basis der erfassten geographischen Position abzurufen und über die Benutzerschnittstelle anzuzeigen, und die erfasste geografische Position auf der Karte grafische kenntlich zu machen.

11. Vorrichtung nach einem der vorhergehenden Ansprüche, umfassend ein Endgerät mit einer Kamera, wobei das Endgerät konfiguriert ist, die Kameradaten über die Benutzerschnittstelle anzuzeigen, und auf Basis erfasster Kameradaten eine KIgestützte Bilddatensuche in den Grafiken durchzuführen und dann eine zugeordnete Ausgabe der gefundenen Grafik und des dieser Grafik in der Zuordnungstabelle zugeordneten Textabschnitts über die Benutzerschnittstelle anzuzeigen.

12. Vorrichtung nach einem der vorhergehenden Ansprüche, umfassend ein Endgerät mit einer Kamera, wobei das Endgerät konfiguriert ist, die Kameradaten über die Benutzerschnittstelle anzuzeigen, wobei die Vorrichtung so konfiguriert ist, auf einen Speicher mit Augmented Reality Inhalten zuzugreifen, und auf Basis erfasster Kameradaten eine Kl-gestützte Bilddatensuche in den Augmented Reality Inhalten durchzuführen und über die Benutzerschnittstelle anzuzeigen.

13. Vorrichtung nach einem der vorhergehenden Ansprüche, wobei die Vorrichtung ein Spracherkennungsmodul mit Mikrofon umfasst, das konfiguriert ist, Sprachbefehle zu empfangen und mit vorbestimmten, gespeicherten Befehlen abzugleichen und bei einer Übereinstimmung mit einem vorbestimmten, gespeicherten Befehl diesen auszuführen, und wobei die erste vorbestimmte Operation und/oder die zweite vorbestimmte Operation einen Sprachbefehl umfasst.

14. Ein Computerprogrammprodukt, das auf einem Computer abläuft, wobei das Computerprogrammprodukt konfiguriert ist, auf eine Datenbank zuzugreifen, in der Informationspakete gespeichert sind, wobei
- das Computerprogrammprodukt konfiguriert ist, ein Informationspaket abzurufen, wenn eine erste vorbestimmte Operation erfolgt, wobei
∘ das Informationspaket einen Text und eine oder mehrere Grafiken umfasst, wobei
∘ der Text aus einer Vielzahl von Textabschnitten in einer vorgegebenen Reihenfolge besteht, wobei
▪ ein Textabschnitt aus einem oder mehreren Wörtern besteht, wobei
∘ das Computerprogrammprodukt eine Zuordnungstabelle umfasst, in der jede Grafik mindestens einem Textabschnitt zugeordnet ist, wobei
- das Computerprogrammprodukt konfiguriert ist, das Informationspaket auf einer Benutzerschnittstelle bereitzustellen, wenn eine zweite vorbestimmte Operation erfolgt, wobei
∘ die Bereitstellung des Textes umfasst, die Textabschnitte in der vorgegebenen Reihenfolge über die Benutzerschnittstelle auszugeben, wobei
▪ die vorgegebene Reihenfolge eine zeitliche Abfolge ist, in der die Textabschnitte ausgegeben werden, wobei
∘ die Bereitstellung einer Grafik aus der einen oder mehreren Grafiken umfasst,
▪ die Grafik anhand einer Zuordnung aus der Zuordnungstabelle synchron zur Ausgabe eines Textabschnittes zu ermitteln, und
▪ die ermittelte Grafik gleichzeitig mit der Ausgabe des Textabschnittes, der sie in der Zuordnungstabelle zugeordnet ist, über die Benutzerschnittstelle anzuzeigen.
